# EUROPEAN PATENT APPLICATION

(11) **EP 4 456 550 A1**
(43) Date of publication of application: **30.10.2024**
(21) Application number: 24171189.4
(22) Date of filing: 19.04.2024
(51) Int. Cl.: H04R 1/02, G06F 1/16, H04R 5/02, H04R 9/06

(54) **SOUND DEVICE AND DISPLAY INCLUDING THE SAME**

(30) Priority: 28.04.2023 KR 20230056238
(71) Applicant: LG Electronics Inc., Yeongdeungpo-gu Seoul 07336 (KR)
(72) Inventor: YOUN, Hyunseung, 06772 Seoul (KR)
(74) Representative: Frenkel, Matthias Alexander

(57) **Abstract**

Disclosed is a sound device. The sound device may include a frame; a speaker adjacent to the frame; a coupling part formed at one side of the speaker, and facing the frame; and a holder positioned between the frame and the coupling part, and coupled to the coupling part in a direction toward the coupling part from the frame, wherein the holder may penetrate the frame in a direction toward the frame from the coupling part, and may be coupled to the frame.

## Description

### CROSS-REFERENCE TO RELATED APPLICATION

This application claims the priority benefit of Korean Patent Application No. 10-2023-0056238, filed on April 28, 2023, the disclosure of which is incorporated herein by reference in its entirety.

### BACKGROUND OF THE INVENTION

### Field of the invention

The present disclosure relates to a sound device and a display device having the same.

### Description of the Related Art

As the information society develops, the demand for display devices is also increasing in various forms. In response to this, various display devices such as Liquid Crystal Display Device (LCD), Plasma Display Panel (PDP), Electroluminescent Display (ELD), Vacuum Fluorescent Display (VFD), and Organic Light Emitting Diode (OLED) have been researched and used in recent years.

Among these, the LCD panel includes a TFT substrate and a color filter substrate that face each other with a liquid crystal layer interposed therebetween, and may display an image by using light provided from a backlight unit. In addition, the OLED panel may display an image by depositing an organic material layer capable of self-emitting light on a substrate on which a transparent electrode is formed.

Such a display device has a speaker. Here, a speaker is a device that converts an electric acoustic signal into sound waves and outputs them. The speaker may be subdivided into a woofer, a midrange, and a tweeter according to a sound range.

Due to the recent slimming trend of display device, the thickness of speaker provided in a display device is also becoming thinner.

### SUMMARY OF THE INVENTION

It is an objective of the present disclosure to solve the above and other problems.

Another objective of the present disclosure may be to provide a structure that couples a speaker to a frame and minimizes the transmission of vibrations of the speaker to the frame.

Another objective of the present disclosure may be to provide a structure that minimizes the cost required for coupling a speaker and a frame.

Another objective of the present disclosure may be to provide a sound device that can minimize volume loss of a speaker due to a coupling structure between the speaker and a frame located inside the speaker.

Another objective of the present disclosure may be to provide a structure capable of stably coupling a speaker to a frame while having a small thickness.

Another objective of the present disclosure may be to provide a structure capable of preventing a speaker from being shaken or separated from a frame while being coupled to the frame.

In accordance with an aspect of the present disclosure, a sound device may include: a frame; a speaker adjacent to the frame; a coupling part formed at one side of the speaker, and facing the frame; and a holder positioned between the frame and the coupling part, and coupled to the coupling part in a direction toward the coupling part from the frame, wherein the holder may penetrate the frame in a direction toward the frame from the coupling part, and may be coupled to the frame.

### BRIEF DESCRIPTION OF THE DRAWINGS

The above and other objects, features and advantages of the present invention will be more apparent from the following detailed description in conjunction with the accompanying drawings, in which:

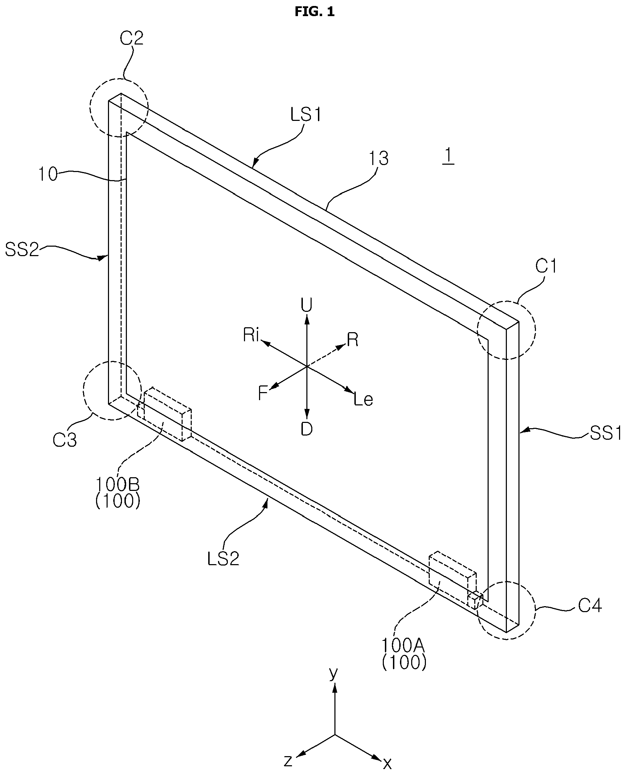

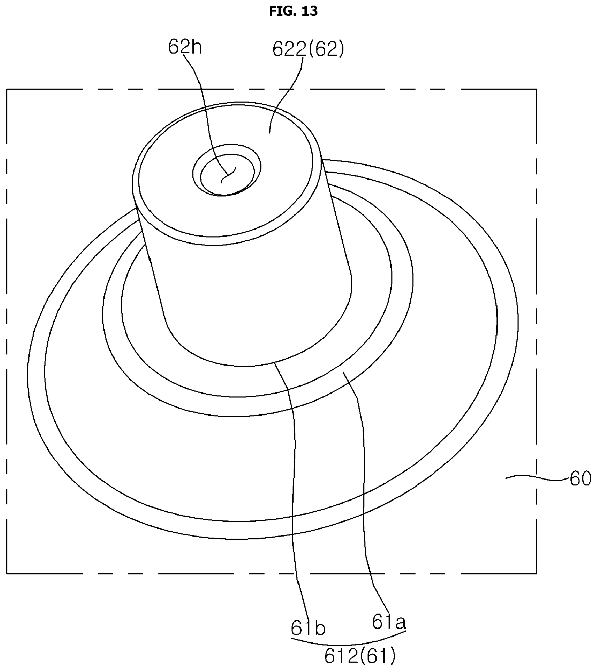

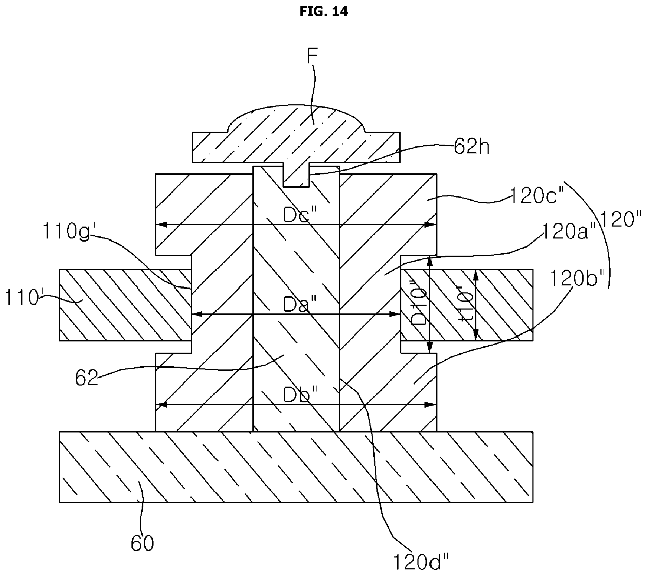

FIGS. 1 to 27 are diagrams illustrating examples of a sound device and a display device having the same according to embodiments of the present disclosure.

### DETAILED DESCRIPTION

Description will now be given in detail according to exemplary embodiments disclosed herein, with reference to the accompanying drawings. For the sake of brief description with reference to the drawings, the same or equivalent components may be denoted by the same reference numbers, and description thereof will not be repeated.

In general, suffixes such as "module" and "unit" may be used to refer to elements or components. Use of such suffixes herein is merely intended to facilitate description of the specification, and the suffixes do not have any special meaning or function.

In the present disclosure, that which is well known to one of ordinary skill in the relevant art has generally been omitted for the sake of brevity. The accompanying drawings are used to assist in easy understanding of various technical features and it should be understood that the embodiments presented herein are not limited by the accompanying drawings. As such, the present disclosure should be construed to extend to any alterations, equivalents and substitutes in addition to those which are particularly set out in the accompanying drawings.

It will be understood that although the terms first, second, etc. may be used herein to describe various elements, these elements should not be limited by these terms. These terms are only used to distinguish one element from another.

It will be understood that when an element is referred to as being "connected with" another element, there may be intervening elements present. In contrast, it will be understood that when an element is referred to as being "directly connected with" another element, there are no intervening elements present.

A singular representation may include a plural representation unless context clearly indicates otherwise.

In the following description, even if the embodiment is described with reference to specific drawings, if necessary, reference numerals not appearing in the specific drawings may be referred to, and reference numerals not appearing in the specific drawings are used in a case where the above reference numerals appear in the other figures.

Direction indications of up(U), down(D), left(Le), right(Ri), front(F), and rear(R) shown in the drawings are only for convenience of explanation, and the technical concept disclosed in this specification is not limited thereto.

Hereinafter, a display panel of the present disclosure may be an OLED panel described later with reference to FIG. 2 or an LCD panel described later with reference to FIGS. 3 and 4, but the present disclosure may be applied to various types of display panels excluding these.

Referring to FIG. 1, a display device 1 may include a display panel 10. The display panel 10 may display an image.

The display device 1 may include a first long side LS1, a second long side LS2 opposite to the first long side LS1, a first short side SS1 adjacent to the first long side LS1 and the second long side LS2, and a second short side SS2 opposite to the first short side SS1. Meanwhile, for convenience of description, it is illustrated and described that the lengths of the first and second long sides LS1 and LS2 are longer than the lengths of the first and second short sides SS1 and SS2, but the lengths of the first and second long sides LS1 and LS2 may also substantially the same as the lengths of the first and second short sides SS1 and SS2.

A direction parallel to the long sides LS1 and LS2 of the display device 1 may be referred to as a left-right direction. A direction parallel to the short sides SS1 and SS2 of the display device 1 may be referred to as an up-down direction. A direction perpendicular to the long sides LS1 and LS2 and the short sides SS1 and SS2 of the display device 1 may be referred to as a front-rear direction.

A direction in which the display panel 10 displays an image may be referred to as front (F, z), and a direction opposite to this may be referred to as rear R. The side of the first long side LS1 may be referred to as an upper side (U, y), and the side of the second long side LS2 may be referred to as a lower side D. The side of the first short side SS1 may be referred to as a left side (Le, x), and the side of the second short side SS2 may be referred to as a right side Ri.

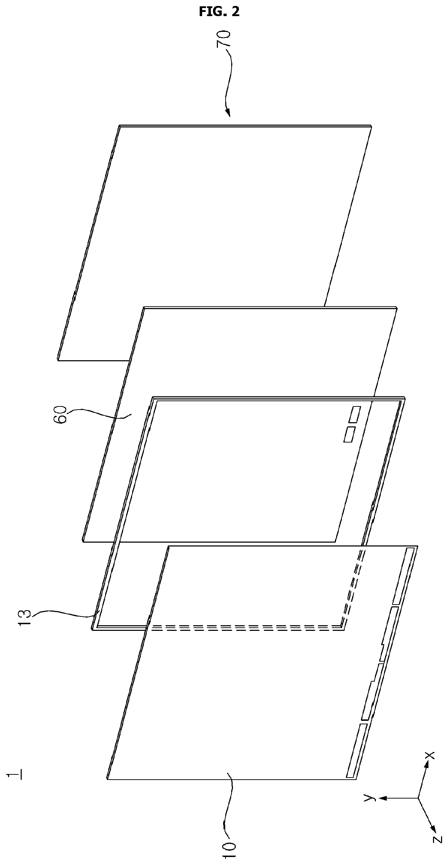

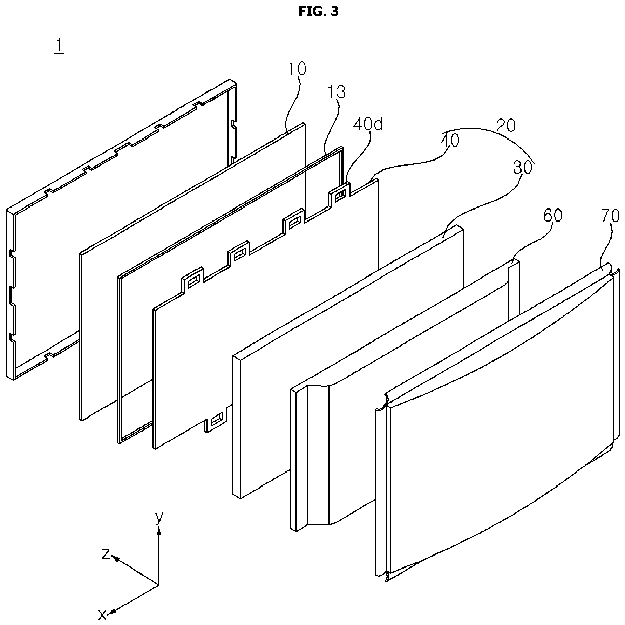

The first long side LS1, the second long side LS2, the first short side SS1, and the second short side SS2 may be referred to as an edge of the display device 1. A guide panel 13 (see FIGS. 2 and 3) described later may define edges of the display device 1. A point where the first long side LS1, the second long side LS2, the first short side SS1, and the second short side SS2 meet each other may be referred to as a corner.

For example, a point where the first short side SS1 and the first long side LS1 meet may be referred to as a first corner C1. A point where the first long side LS1 and the second short side SS2 meet may be referred to as a second corner C2. A point where the second short side SS2 and the second long side LS2 meet may be referred to as a third corner C3. A point where the second long side LS2 and the first short side SS1 meet may be referred to as a fourth corner C4.

Referring to FIG. 2, the display device 1 may include a display panel 10, a guide panel 13, a frame 60, and a back cover 70.

The display panel 10 may define the front surface of the display device 1, and may display an image. The display panel 10 may divide an image into a plurality of pixels and output an image by adjusting color, brightness, and saturation for each pixel. The display panel 10 may be divided into an active area in which an image is displayed and a de-active area in which an image is not displayed. The display panel 10 may generate light corresponding to red, green, or blue color according to a control signal. The display panel 10 may be referred to as an OLED panel.

The guide panel 13 may extend along the rim of the display panel 10. The guide panel 13 may be referred to as a middle cabinet 13 or a side frame 13.

The frame 60 may be located in a rear of the display panel 10, and may be coupled to the display panel 10. The guide panel 13 may be located between the display panel 10 and the frame 60, and may be coupled to the display panel 10 and the frame 60. Electronic components may be mounted on the frame 60. For example, the frame 60 may include a metal material such as aluminum alloy. The frame 60 may be referred to as a main frame 60, a module cover 60 or a bottom cover 60.

The back cover 70 may cover the rear of the frame 60. The back cover 70 may be coupled to the frame 60. For example, the back cover 70 may be an injection product made of resin. For another example, the back cover 70 may include a metal material.

Referring to FIG. 3, the display device 1 may include a display panel 10, a guide panel 13, a backlight unit 20, a frame 60, and a back cover 70.

The display panel 10 may define the front surface of the display device 1, and may display an image. The display panel 10 may display an image as a plurality of pixels output Red, Green, or Blue (RGB) for each pixel according to timing. The display panel 10 may be divided into an active area in which an image is displayed and a de-active area in which an image is not displayed. The display panel 10 may include a front substrate and a rear substrate that face each other with a liquid crystal layer therebetween. The display panel 10 may be referred to as an LCD panel.

The front substrate may include a plurality of pixels including red, green, and blue sub-pixels. The front substrate may output light corresponding to red, green, or blue color according to a control signal.

The rear substrate may include switching elements. The rear substrate may switch a pixel electrode. For example, the pixel electrode may change the molecular arrangement of the liquid crystal layer according to a control signal input from the outside. The liquid crystal layer may include liquid crystal molecules. The arrangement of liquid crystal molecules may be changed in response to a voltage difference generated between a pixel electrode and a common electrode. The liquid crystal layer may transmit light provided from the backlight unit 20 to the front substrate or block the light.

The guide panel 13 may extend along the rim of the display panel 10. The guide panel 13 may be referred to as a middle cabinet 13 or a side frame 13.

The backlight unit 20 may be located in a rear of the display panel 10. The backlight unit 20 may include light sources. The backlight unit 20 may be coupled to the front surface of the frame 60. The backlight unit 20 may be driven by a full driving method or a partial driving method such as local dimming and impulsive. The backlight unit 20 may include an optical sheet 40 and an optical layer 30.

The optical sheet 40 may evenly transmit light from a light source to the display panel 10. The optical sheet 40 may be composed of a plurality of layers. For example, the optical sheet 40 may include a prism sheet or a diffusion sheet.

The frame 60 may be located in a rear of the display panel 10, and the display panel 10 may be coupled thereto. The guide panel 13 may be located between the display panel 10 and the frame 60, and may be coupled to the display panel 10 and the frame 60. Electronic components may be mounted on the frame 60. For example, the frame 60 may include a metal material such as aluminum alloy. The frame 60 may be referred to as a main frame 60, a module cover 60, or a bottom cover 60.

The back cover 70 may cover the rear of the frame 60. The back cover 70 may be coupled to the frame 60. For example, the back cover 70 may be an injection product made of resin. For another example, the back cover 70 may include a metal material.

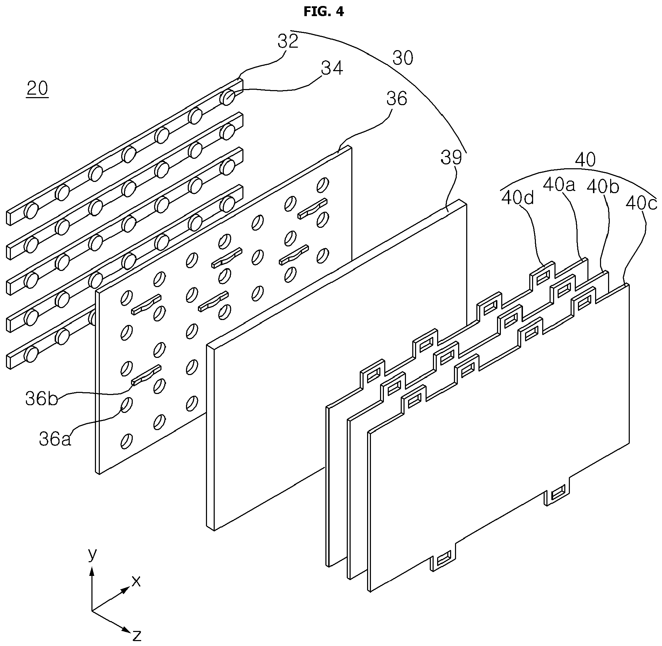

Referring to FIGS. 3 and 4, the backlight unit 20 may include an optical layer 30 and an optical sheet 40. The optical layer 30 may include a substrate 32, at least one light source 34, a reflective sheet 36, and a diffusion plate 39.

The substrate 32 may be coupled to the front surface of the frame 60. The substrate 32 may have a plate shape, or may be composed of a plurality of straps spaced apart from each other in a vertical direction. The substrate 32 may be composed of at least one of polyethylene terephthalate (PET), glass, polycarbonate (PC), or silicon. The substrate 32 may be a Printed Circuit Board (PCB).

At least one light source 34 may be mounted on the substrate 32. A plurality of light sources 34 may be spaced apart from each other on the substrate 32. An electrode pattern for connecting an adapter and the light source 34 may be formed on the substrate 32. For example, a carbon nanotube electrode pattern for connecting the light source 34 and an adapter may be formed on the substrate 32.

For example, the light source 34 may be a light emitting diode LED chip or a light emitting diode package including at least one light emitting diode chip. The light source 34 may be composed of a colored LED emitting at least one color among colors such as red, green, and blue, or a white LED. The colored LED may include at least one of a red LED, a green LED, or a blue LED. The light source 34 may be referred to as a light assembly 34.

The reflective sheet 36 may be located in front of the substrate 32. The reflective sheet 36 may be located on an area of the substrate 32 excluding an area where the light source 34 is formed. The reflective sheet 36 may have a hole 36a where the light source 34 is located.

In addition, the reflective sheet 36 may include at least one of a reflective material such as a metal or a metal oxide. For example, the reflective sheet 36 may include a metal having a high reflectance such as at least one of aluminum Al, silver Ag, gold Au, and titanium dioxide TiO 2 and/or metal oxide. For example, resin may be deposited or applied on the light source 34 and/or the reflective sheet 36. The resin may diffuse light from the light source 34. Accordingly, the reflective sheet 36 may reflect light from the light source 34 or light reflected from the diffusion plate 39 forward.

The diffusion plate 39 may be located in front of the reflective sheet 36. The diffuser plate 39 may diffuse light from the light source 34. A spacer 36b may be located between the reflective sheet 36 and the diffusion plate 39, and may support a rear surface of the diffusion plate 39. Accordingly, an air gap may be formed between the reflective sheet 36 and the diffusion plate 39, and light from the light source 34 may be widely spread by the air gap.

The optical sheet 40 may be located in front of the diffusion plate 39. The rear surface of the optical sheet 40 may be in close contact with the diffusion plate 39, and the front surface of the optical sheet 40 may be in close contact with or adjacent to the rear surface of the display panel 10. The optical sheet 40 may include a diffusion sheet and/or a prism sheet.

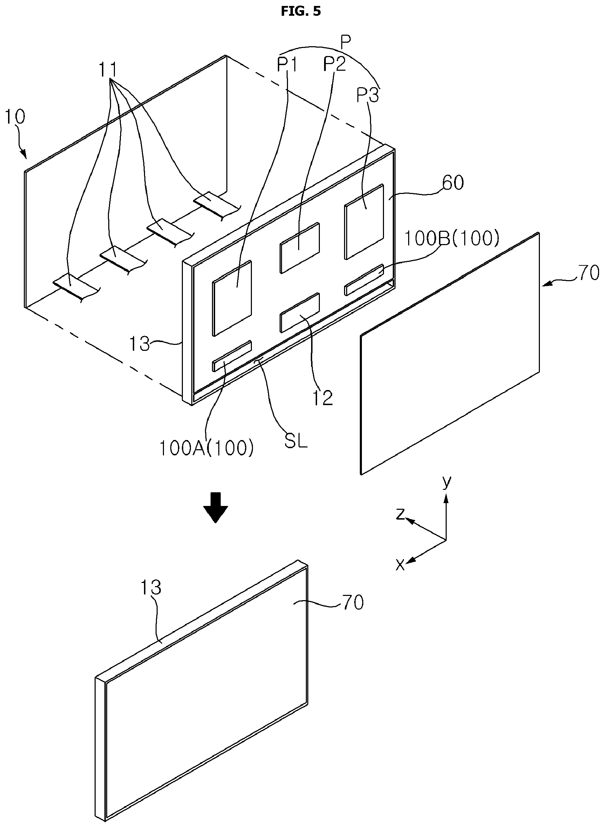

Referring to FIG. 5, a board P may be coupled to the frame 60. The board P may be located between the frame 60 and the back cover 70, and may be coupled to the rear surface of the frame 60. A plurality of electronic elements may be mounted on the board P. The board P may be a printed circuit board PCB, and may be electrically connected to electronic components of the display device. A plurality of boards P may be coupled to the rear surface of the frame 80.

A power supply board P1 may supply power to each component of the display device. A main board P3 may control each component of the display device. A timing controller board P2 may be connected to the main board P3 through a cable, and may provide an image signal to the display panel 10.

The cable 11 may be electrically connected to the display panel 10 while being adjacent to the lower side of the display panel 10. The cable 11 may pass through a slit SL or hole formed in the frame 60. A source PCB 12 may be coupled to the rear surface of the frame 80 while being adjacent to the lower side of the frame 60, and may be electrically connected to the cable 11. The source PCB 12 may be electrically connected to the timing controller board P2 through a cable.

Accordingly, the timing controller board P4 may provide digital video data and a timing control signal to the display panel 10 through the source PCB 12.

The speaker 100 may be coupled to the frame 60. The speaker 100 may be located between the frame 60 and the back cover 70, and may be coupled to the rear surface of the frame 60. The speaker 100 may be adjacent to one side of the frame 60. The speaker 100 may be adjacent to the lower side of the frame 60, and may provide sound to the front and lower side of the display device 1. For example, a plurality of speakers 100A, and 100B may be coupled to the frame 60.

The sound device may include a speaker 100, a frame 60, and components (a coupling unit and a holder described later) for coupling the speaker 100 to the frame 60. The frame 60 may be the frame 60 of the above mentioned display device. Alternatively, the frame 60 may be a frame of an audio device.

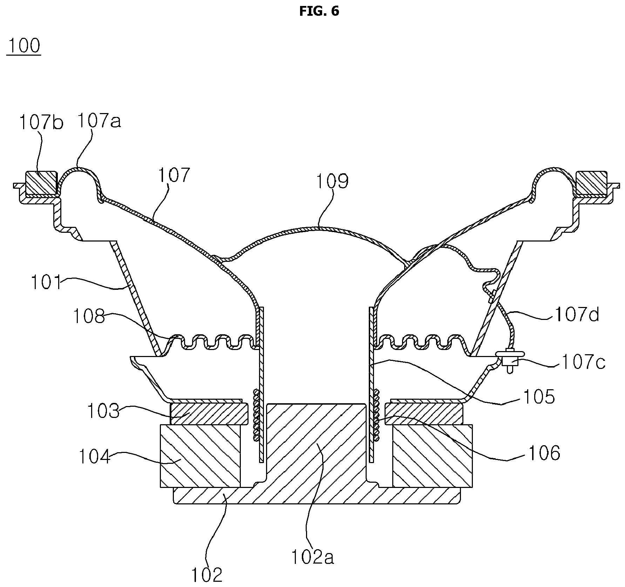

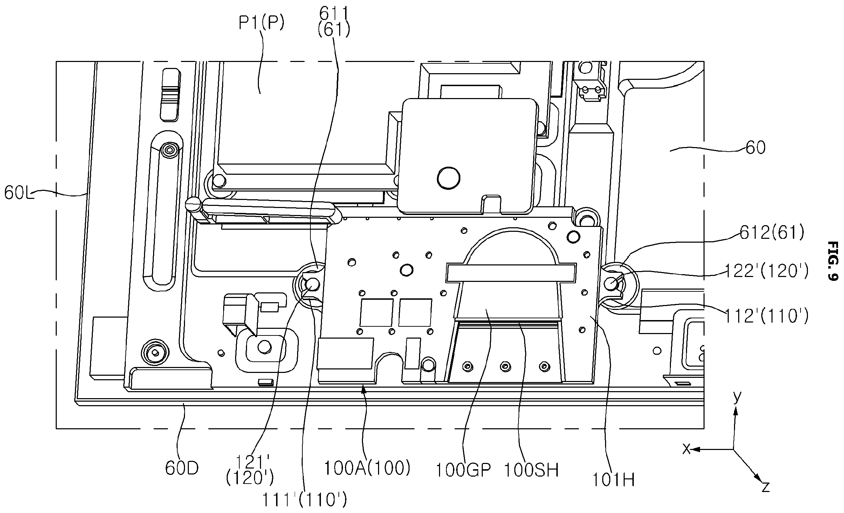

Referring to FIG. 6, the speaker frame 101 may support components of the speaker 100. The speaker frame 101 may be installed inside a housing 101H (see FIGS. 9, 16 and 23) of the speaker 100 described later.

A first plate 102 may form one side of the speaker 100. A pole piece 102a may protrude from the central portion of the first plate 102, and may have a hollow cylinder or solid cylinder shape. A second plate 103 may be spaced apart from the first plate 102, and may have a ring shape. A portion of the pole piece 102a may pass through the second plate 103, and an air gap may be formed between the second plate 103 and the pole piece 102a.

A magnet 104 may be disposed between the first plate 102 and the second plate 103, and may have a ring shape. A portion of the pole piece 102a may pass through the magnet 104. A bobbin 105 may be located in an air gap between the pole piece 102a and the second plate 103 and an air gap between the pole piece 102a and the magnet 104, and may have a hollow cylinder shape extending in the length direction of the pole piece 102a. A coil 106 may be formed or wound on the outer circumferential surface of the bobbin 105, and may be referred to as a voice coil 106. A terminal 27c and a tinsel wire 27d may transmit electrical energy output from an amplifier to the coil 106.

A spider 108 may have elasticity. The spider 108 may be located between the bobbin 105 and the speaker frame 101, and may be coupled to the bobbin 105 and the speaker frame 101. The spider 108 may support the bobbin 105, and may be referred to as a damper 108.

One side of a diaphragm 107 may be coupled or attached to the bobbin 105, and the other side of the diaphragm 107 may be supported by an elastic edge 107a. For example, the diaphragm 107 may have a cone or dome shape. A gasket 107b may be provided in a lateral surface of the edge 107a, and may prevent interference of peripheral devices with respect to the vibrating diaphragm 107. For example, a dust cap 109 may cover the central portion of the diaphragm 107, and prevent dust or the like from entering a magnetic circuit.

When a magnetic line of force is formed in the air gap by the magnet 104, and a current flows through the coil 106, a Lorentz force may be generated. The magnitude of the Lorentz force may be proportional to the magnitude of the magnetic line of force (magnetic flux density), the amount of current, and the length of the wound coil, and the direction of the force may be directed in a direction perpendicular to a plane formed by the magnetic flux density and the current.

Accordingly, the diaphragm 107 may vibrate in the length direction of the pole piece 102a. Based on FIG. 6, when the diaphragm 107 moves upward, (+) sound pressure may be generated, and when the diaphragm 107 moves downward, (-) sound pressure may be generated, and the speaker 100 may provide sound upward. According to the vibration of the diaphragm 107, the air inside the housing 101H (see FIG. 9) may also resonate, and the pressure thereof may be changed.

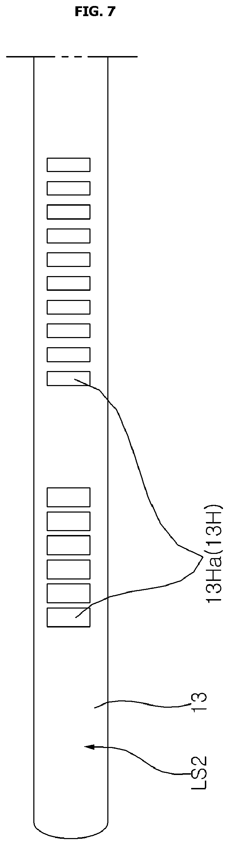

Referring to FIG. 7, an opening 13H may be formed in the guide panel 13 while being adjacent to the speaker 100 (see FIG. 5). For example, the speaker 100 may be adjacent to the second long side LS2 (i.e. the lower side of the display device 1), and the opening 13H may be formed in a portion of the guide panel 13 defining the second long side LS2. A sound output from the speaker 100 may be provided to the outside through the opening 13H. The opening 13H may be formed as holes spaced apart from each other. For example, the plurality of openings 13H may face the plurality of speakers 100.

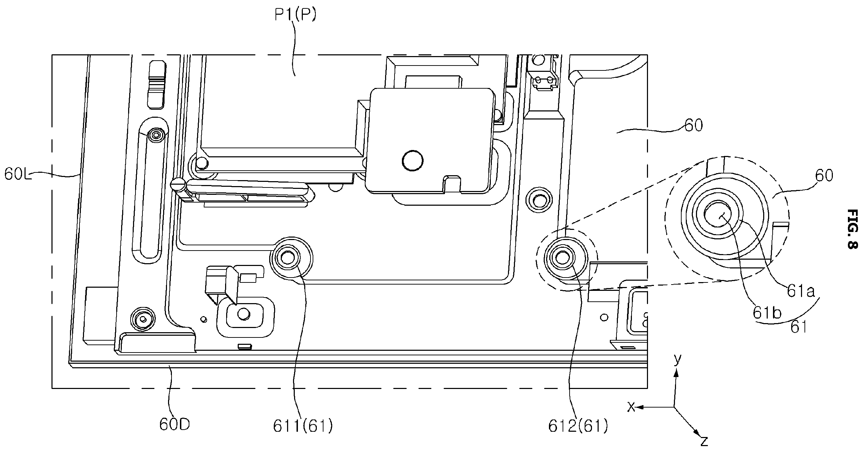

Referring to FIG. 8, a fixing part 61 may be formed while being pressed from the front surface of the frame 60 to the rear. The fixing part 61 may be referred to as a forming part 61. A fixing hole 61b may be formed by penetrating the fixing part 61. For example, a plurality of fixing parts 611 and 612 may be spaced apart from each other.

Referring to FIG. 9, components of the speaker 100 described above with reference to FIG. 6 may be disposed inside the housing 101H of the speaker 100. For example, the diaphragm 107 (see FIG. 6) of the speaker 100 may provide sound rearward, and the guide plate 100GP may guide the sound of the diaphragm 107 downward. A sound guided by the guide plate 100GP may be provided to the opening 13H (see FIG. 7) through a speaker hole 100SH.

The speaker 100 may be adjacent to the lower side 60D of the frame 60. A first speaker 100A may be adjacent to the left side 60L of the frame 60, and a second speaker 100B (see FIG. 5) may be adjacent to the right side of the frame 60. A coupling part 110' may be formed in one side of the housing 101H, and may be coupled to the fixing part 61 through a holder 120'. For example, a plurality of coupling parts 111' and 112' may be spaced apart from each other, and may be coupled to a plurality of fixing parts 611 and 612 through a plurality of holders 121' and 122'. Accordingly, the speaker 100 may be coupled to the rear surface of the frame 60.

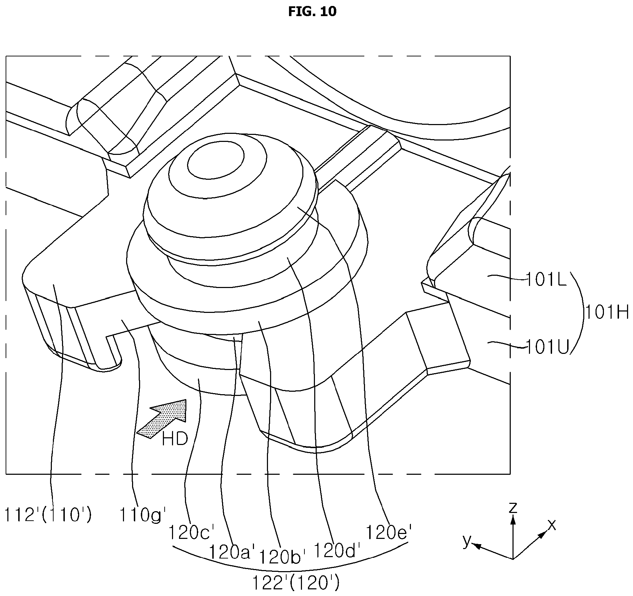

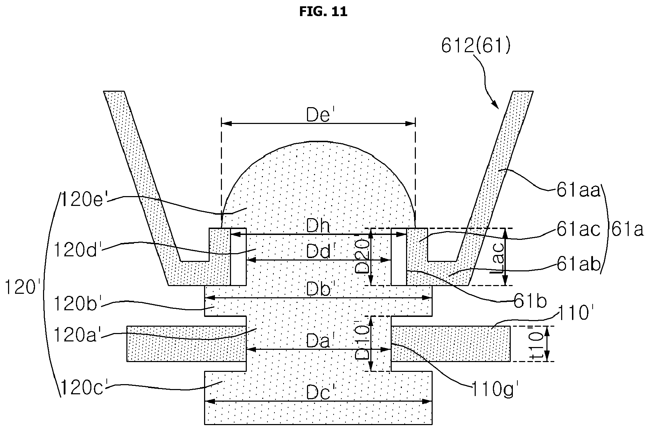

Referring to FIGS. 10 and 11, the housing 101H may include an upper housing 101U and a lower housing 101L. The lower housing 101L may face the rear surface of the frame 60 (see FIG. 9), and the upper housing 101U may be opposite to the lower housing 101L and be coupled to the lower housing 101L. The inner space of the housing 101H may be formed between the lower housing 101L and the upper housing 101U.

The coupling part 110' may be formed in one side of the housing 101H. For example, the coupling part 110' may protrude outward from one side of the upper housing 101H. A groove 110g' may be formed from a distal end of the coupling part 110' to the inside of the coupling part 110'. The groove 110g' may extend in a horizontal direction (i.e. a direction on the XY plane) parallel to the housing 101H.

The holder 120' may include a body 120a', 120b', 120c', a neck 120d', and a head 120e'. The body 120a', 120b', 120c' may include a first part 120a', a second part 120b', and a third part 120c'. The holder 120' may have elasticity. The holder 120' may include a soft material such as rubber and silicon. Accordingly, the vibration of the speaker 100 coupled to the frame 60 can be suppressed from transmitting to the frame 60 through the holder 120'.

The first part 120a' may have a cylindrical shape, and may extend in a direction intersecting the groove 110g'. The second part 120b' may protrude from one end of the first part 120a' in the radial direction of the first part 120a' and may extend in the circumferential direction of the first part 120a'. The third part 120c' may protrude from the other end of the first part 120a' in the radial direction of the first part 120a', and may extend in the circumferential direction of the first part 120a'. The diameter Da' of the first part 120a' may be equal to or larger than the diameter of the groove 110g'. The diameter Db' of the second part 120b' and the diameter Dc' of the third part 120c' may be equal to each other, and may be larger than the diameter Da' of the first part 120a'. The distance D10' between the second part 120b' and the third part 120c' may be equal to or larger than the thickness t10' of the coupling part 110'. When the first part 120a' is inserted into the groove 110g' in the horizontal direction (see arrow HD in FIG. 10), the coupling part 110' may be located between the second part 120b' and the third part 120c'. That is, the holder 120' may be detachably coupled to the coupling part 110'.

The neck 120d' may protrude from the one end of the first part 120a' in the length direction of the first part 120a', and may face the fixing part 61.

The head 120e' may protrude from the distal end of the neck 120d' in the length direction of the first part 120a', and may be stepped with respect to the neck 120d'. The head 120e' may have a hemispherical or dome shape.

The fixing part 61 may include a fixing body 61a and a fixing hole 61b. The fixing part 61 may have a truncated cone shape as a whole. The fixed body 61a may include an inclined portion 61aa, a horizontal portion 61ab, and a vertical portion 61ac. The inclined portion 61aa may protrude rearward from the rear surface of the frame 60, and may have a smaller diameter as it is farther away from the rear surface. The horizontal portion 61ab may be bent from the distal end of the inclined portion 61aa to the inside of the inclined portion 61aa, and may have a ring shape parallel to the rear surface of the frame 60.

The vertical portion 61ac may be bent toward the rear surface of the frame 60 from the distal end of the horizontal portion 61ab. The horizontal portion 61ab and the vertical portion 61ac may define a boundary of the fixing hole 61b.

The diameter Dd' of the above mentioned neck 120d' may be equal to or smaller than the diameter Dh of the fixing hole 61b. The diameter De' of the head 120e' may be larger than the diameter Dh of the fixing hole 61b. The diameter Db' of the second part 120b' may be larger than the diameter Dh of the fixing hole 61b. As the length of the neck 102d', the distance D20' between the second part 120b' and the head 120e' may be equal to or larger than the length Lac of the vertical portion 61ac. When the neck 120d' and the head 120e' are inserted into the fixing part 61 through the fixing hole 61b, the neck 120d' may be located in the fixing hole 61b, the second part 120b' may be hooked to the horizontal portion 61ab, and the head 120e' may be hooked to the vertical portion 61ac. That is, the holder 120' may be detachably coupled to the fixing part 61.

Accordingly, the speaker 100 may be coupled in the vertical direction to the fixing part 61 of the frame 60 through the holder 120' coupled in the horizontal direction to the coupling part 110' (see FIGS. 8 and 9).

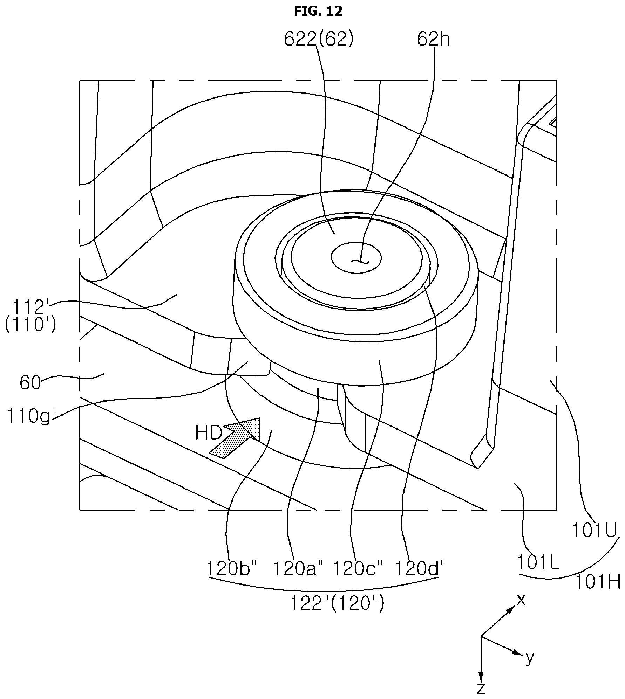

Referring to FIGS. 12 to 14, the coupling part 110' may be formed in one side of the housing 101H. For example, the coupling part 110' may be formed by recessing a part of the lower housing 101L. The groove 110g' may be formed from one side of the coupling part 110' to the inside of the coupling part 110'. The groove 110g' may extend in a horizontal direction (i.e. a direction on the XY plane) parallel to the housing 101H.

A holder 120" may include a body 120a", 120b", 120c" and a channel 120d". The body 120a", 120b", 120c" may include a first part 120a", a second part 120b", and a third part 120c". A holder 120" may have elasticity. The holder 120" may include a soft material such as rubber and silicon. Accordingly, transmission of vibration of the speaker 100 coupled to the frame 60 through the holder 120" to the frame 60 can be suppressed. Accordingly, the vibration of the speaker 100 coupled to the frame 60 can be suppressed from transmitting to the frame 60 through the holder 120".

The first part 120a" may have a cylindrical shape, and may extend in a direction intersecting the groove 110g'. The second part 120b" may protrude from one end of the first part 120a" in the radial direction of the first part 120a" and may extend in the circumferential direction of the first part 120a". The third part 120c" may protrude from the other end of the first part 120a" in the radial direction of the first part 120a", and may extend in the circumferential direction of the first part 120a". The diameter Da" of the first part 120a" may be equal to or larger than the diameter of the groove 110g'. The diameter Db" of the second part 120b" and the diameter Dc" of the third part 120c" may be equal to each other, and may be larger than the diameter Da" of the first part 120a". The distance D10" between the second part 120b" and the third part 120c" may be equal to or larger than the thickness t10' of a coupling part 110". When the first part 120a" is inserted into the groove 110g' in the horizontal direction (see arrow HD in FIG. 12), the coupling part 110' may be located between the second part 120b" and the third part 120c". That is, the holder 120" may be detachably coupled to the coupling part 110'.

A boss 62 may protrude rearward from the frame 60 or the fixing part 61. The boss 62 may be referred to as a protrusion 62 or a protruding part 62. The boss 62 may be a pem nut. The boss 62 may be inserted into the channel 120d" formed in the central portion of the body 120a", 120b", 120c". A fastening member F, such as a screw, may be fastened to a hole 62h of the boss 62 inserted into the channel 120d". The diameter of the fastening member F may be larger than the diameter of the boss 62, and the fastening member F fastened to the hole 62h may be hooked to the third part 120c".

Accordingly, the speaker 100 may be vertically coupled to the boss 62 of the frame 60 through the holder 120" horizontally coupled to the coupling part 110'.

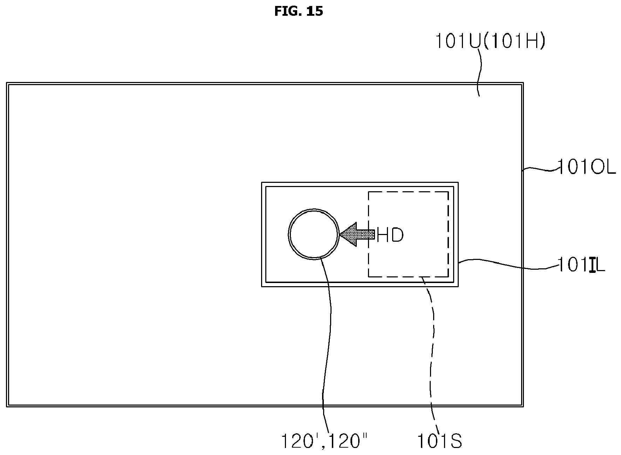

Referring to FIG. 15, the holder 120" may include an outer boundary 101OL formed along the rim of the housing 101H and an inner boundary 101IL formed inside the outer boundary 101OL. The holder 120" may be adjacent to the outer boundary 101OL, and may be inserted into the groove 110g' by horizontal movement (see arrow HD in FIGS. 10 and 12) from the outside of the outer boundary 101OL (see FIGS. 10 and 12). Alternatively, the holder 120" may be located inside the inner rim 101IL (see FIG. 12). At this time, in order to insert the holder 120" into the groove 110g', a space 101S in which the holder 120" can move horizontally may be provided inside the inner boundary 101OL. However, due to the space 101S, the volume of the housing 101H may be reduced, and as a result, bass performance may be deteriorated. In addition, the coupling method of FIGS. 12 to 14 requires the boss 62 and the fastening member F, which may increase manufacturing cost.

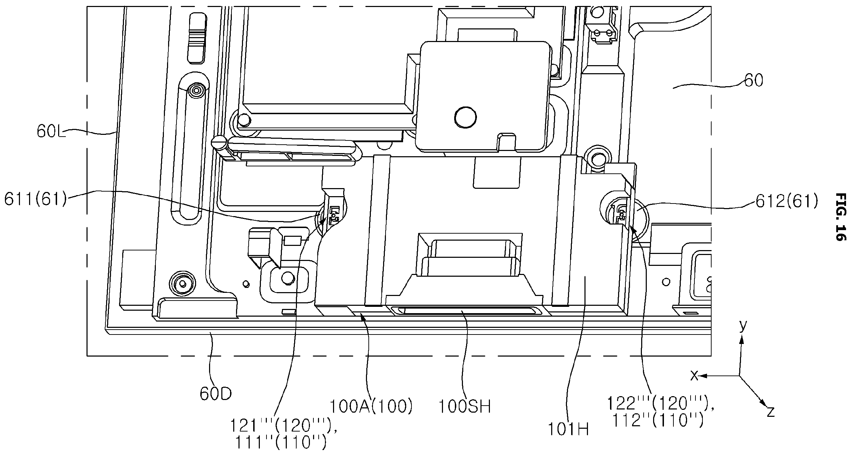

Referring to FIG. 16, components of the speaker 100 described above with reference to FIG. 6 may be disposed inside the housing 101H of the speaker 100. For example, the diaphragm 107 (see FIG. 6) of the speaker 100 may provide sound downward, and may be provided to the opening 13H (see FIG. 7) through the speaker hole 100SH.

The speaker 100 may be adjacent to the lower side 60D of the frame 60. The first speaker 100A may be adjacent to the left side 60L of the frame 60, and the second speaker 100B (see FIG. 5) may be adjacent to the right side of the frame 60. The coupling part 110" may be formed in one side of the housing 101H, and may be coupled to the fixing part 61 through a holder 120"'. For example, a plurality of coupling parts 111" and 112" may be spaced apart from each other, and may be coupled to the plurality of fixing parts 611 and 612 through a plurality of holders 121'", 122"'. Accordingly, the speaker 100 may be coupled to the rear surface of the frame 60.

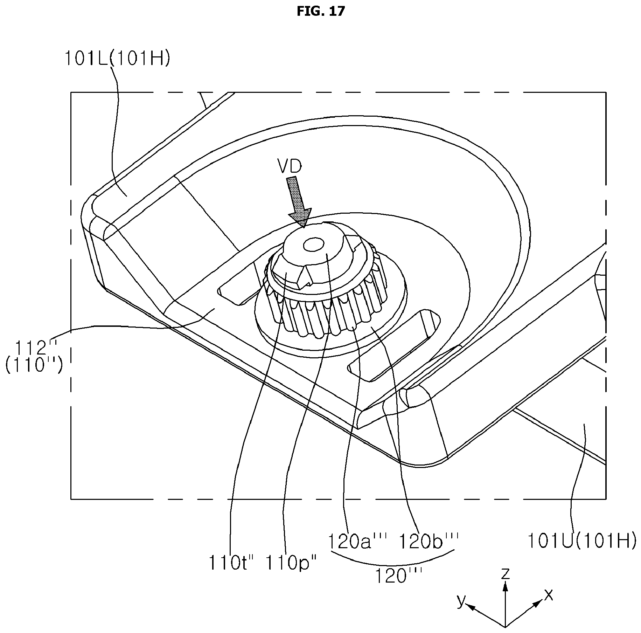

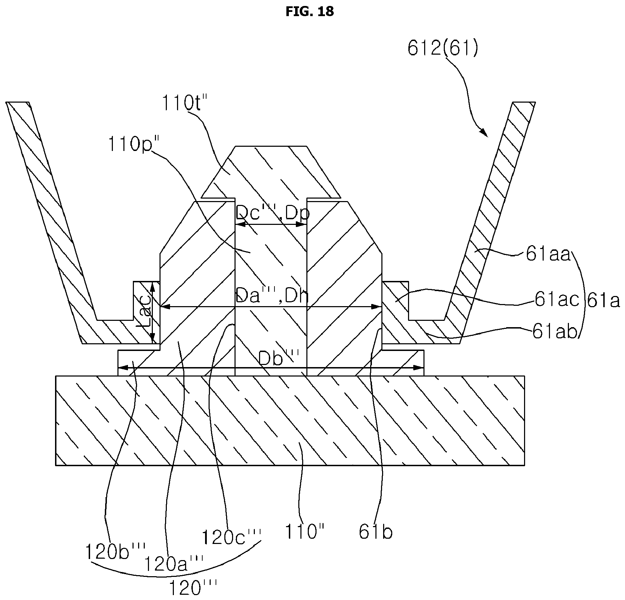

Referring to FIGS. 17 and 18, the coupling part 110" may be formed in one side of the housing 101H. For example, the coupling part 110" may be formed by recessing a part of the lower housing 101L.

The holder 120‴ may include a body 120a‴ and a leg 120b‴. The leg 120b‴ may be referred to as a flange 120b‴. The body 120a‴ may have a cylindrical shape, and may extend in a direction intersecting the fixing part 61. The leg 120b‴ may protrude from one end of the body 120a‴ in a radial direction of the body 120a'", and may extend in a circumferential direction of the body 120a'". The holder 120‴ may have elasticity. The holder 120‴ may include a soft material such as rubber and silicon. Accordingly, the vibration of the speaker 100 coupled to the frame 60 can be suppressed from transmitting to the frame 60 through the holder 120'".

A boss 110p" may protrude forward from the coupling part 110", and may have a cylindrical shape. The boss 110p" may be referred to as a protrusion 110p" or a protruding part 110p". The boss 110p" may be inserted into a channel 120c‴ formed in the central portion of the body 120a'". A stopper 110t" may protrude from the distal end of the boss 110p" in a radial direction of the boss 110p". For example, a plurality of stoppers 110t" may be spaced apart from each other in the circumferential direction of the boss 110p". The diameter Dc" of the channel 120c‴ may be equal to or larger than the diameter Dp of the boss 110p". While the boss 110p" is vertically inserted into the body 120a‴ (see arrow VD in FIG. 17), the channel 120c‴may be deformed by the stopper 110t", and then be restored to a state corresponding to the boss 110p". The stopper 110t" may be hooked to the body 120a'". That is, the holder 120‴ may be detachably coupled to the boss 110p".

The diameter Da‴ of the body 120a‴ before being inserted into the fixing hole 61b may be larger than the diameter Dh of the fixing hole 61b, and the body 120a‴ may be pressed into the fixing hole 61b. The leg 120b‴ may have a diameter Db‴ larger than the diameter Dh of the fixing hole 61b, and may be hooked to the horizontal portion 61ab.

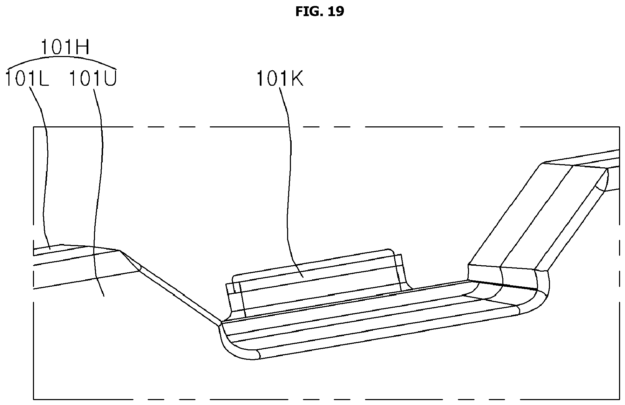

Accordingly, the speaker 100 may be vertically coupled to the fixing part 61 of the frame 60 through the holder 120‴ vertically coupled to the coupling part 110". That is, even if the holder 120‴ is located inside the inner boundary 101IL (see FIG. 15), the space 101S (see FIG. 15) in which the holder 120" can move horizontally may not be necessary. However, in order to maintain the coupling between the holder 120‴ and the fixing part 61 at a certain level or higher, there may be limitations in reducing the length of the body 120a‴ in contact with the vertical portion 61ac. In addition, in order to prevent the speaker 100 from being separated from the frame 60, a separate structure described later with reference to FIG. 19 may be required.

Referring to FIG. 19, a hook 101K may be formed in one side of the housing 101H, and may be spaced apart from the holder 120‴. For example, the hook 101K may protrude outward from one side of the lower housing 101L. The hook 101K may be hooked to a groove (not shown) formed in the frame 60. For example, a plurality of hooks 101K may be spaced apart from each other along the rim of the housing 101H. Accordingly, the speaker 100 may be coupled to the frame 60 through the holder 120‴ and the hook 101K. However, due to the hook 101K and the groove of the frame 60 to which the hook 101K is coupled, manufacturing cost may increase and inconveniences may occur in process and design.

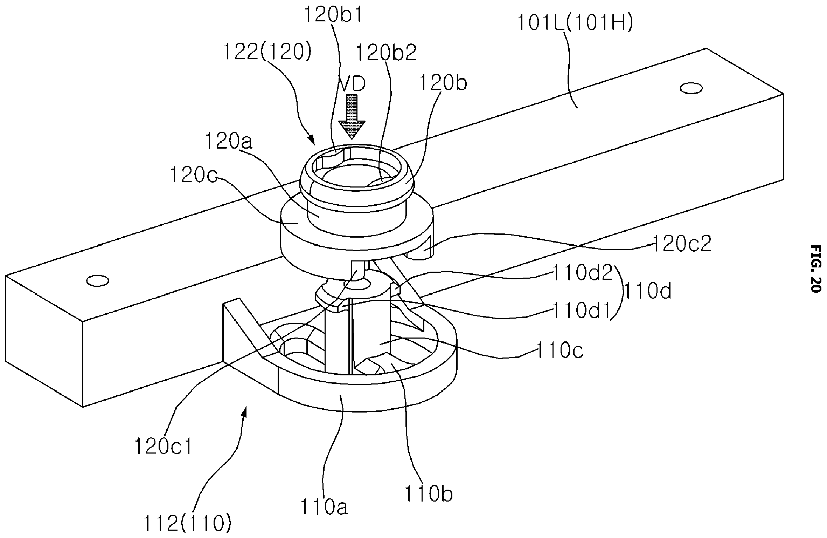

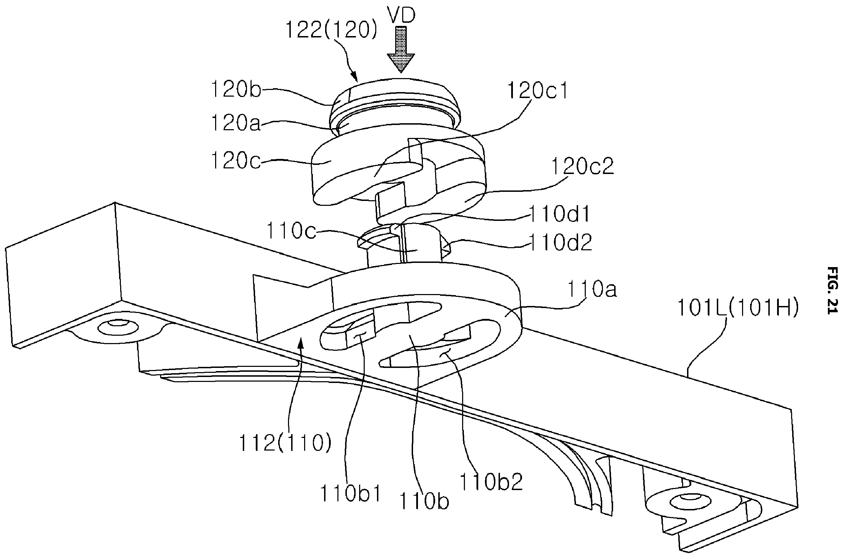

Referring to FIGS. 20 and 21, the coupling part 110 may be formed in one side of the housing 101H. For example, the coupling part 110 may protrude outward from one side of the lower housing 101L. The coupling part 110 may include a base 110a, a bridge 110b, and a boss 110c.

The base 110a may have a ring shape as a whole. The bridge 110b may cross the base 110a, and may be coupled to the inner circumferential surface of the base 110a. A plurality of holes 110b1 and 110b2 may be formed to penetrate the base 110a. A first hole 110b1 may be opposite to a second hole 110b2 with respect to the bridge 110b.

The boss 110c may protrude from the central portion of the bridge 110b toward the fixing hole 61b (see FIG. 8) of the fixing part 61, and may have a cylindrical shape as a whole. The boss 110c may be referred to as a protrusion 110c or a protruding part 110c. The stopper 110d may protrude from the distal end of the boss 110c in a radial direction of the boss 110c. For example, the plurality of stoppers 110d1 and 110d2 may be spaced apart from each other in the circumferential direction of the boss 110c. The stopper 110d may be referred to as a hook 110d.

The holder 120 may include a body 120c, a neck 120a, and a head 120b. The holder 120 may have elasticity. The holder 120 may include a soft material such as rubber and silicon. Accordingly, the vibration of the speaker 100 coupled to the frame 60 can be suppressed from transmitting to the frame 60 through the holder 120'.

The body 120c may have a ring shape. The diameter of the body 120c may be smaller than the diameter of the base 110a. A plurality of legs 120c1 and 120c2 may protrude toward the plurality of holes 110b1 and 110b2 from a first surface of the body 120c. A first leg 120c1 may be aligned with the first hole 110b1, and may have the same shape as the first hole 110b1. A second leg 120c2 may be aligned with the second hole 110b2, and may have the same shape as the second hole 110b2.

The neck 120a may protrude from a second surface of the body 120c opposite the first surface of the body 120c in the length direction of the body 120c. The diameter of the neck 120a may be smaller than the diameter of the body 120c. That is, the neck 120a may be stepped with respect to the body 120c.

The head 120b may be opposite to the body 120c with respect to the neck 120a. The head 120b may protrude from the distal end of the neck 120a in a radial direction of the neck 120a, and may extend in a circumferential direction of the neck 120a. The diameter of the head 120b may be larger than the diameter of the neck 120a. That is, the head 120b may be stepped with respect to the neck 120a.

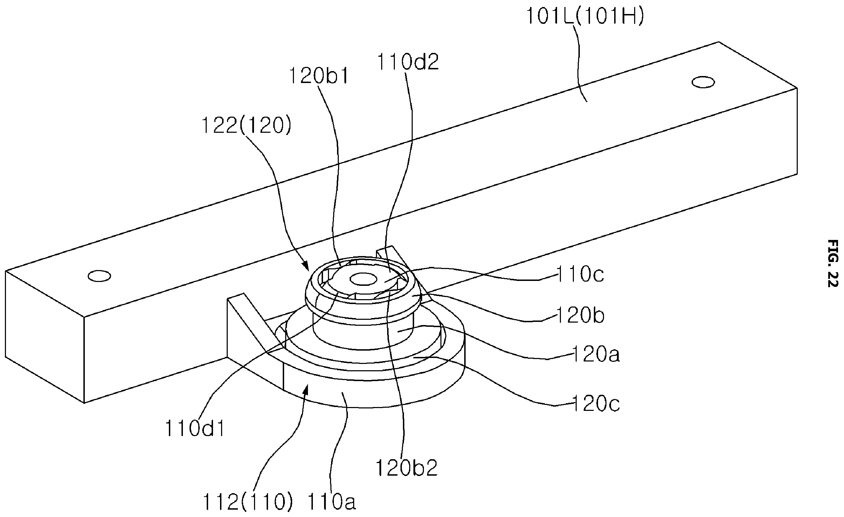

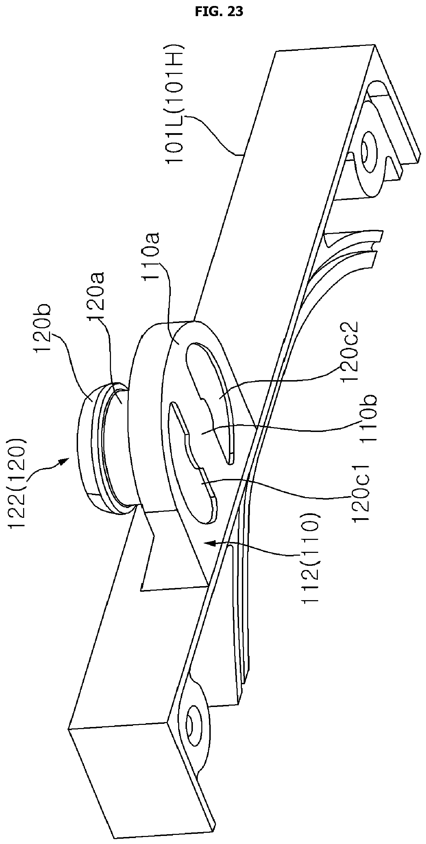

Referring to FIGS. 22 and 23, the holder 120 may be seated on the base 110a. The boss 110c may penetrate the body 120c, the neck 120a, and the head 120b, and a portion of the body 120c between the first leg 120c1 and the second leg 120c2 may be hooked to the bridge 110b. The first leg 120c1 may be inserted into the first hole 110b1, and the second leg 120c2 may be inserted into the second hole 110b2. The first and second legs 120c1 and 120c2 and the first and second holes 110b1 and 110b2 may guide coupling of the holder 120 and the base 110a. The sidewall of the base 110a may cover at least a portion of the side surface of the body 120c.

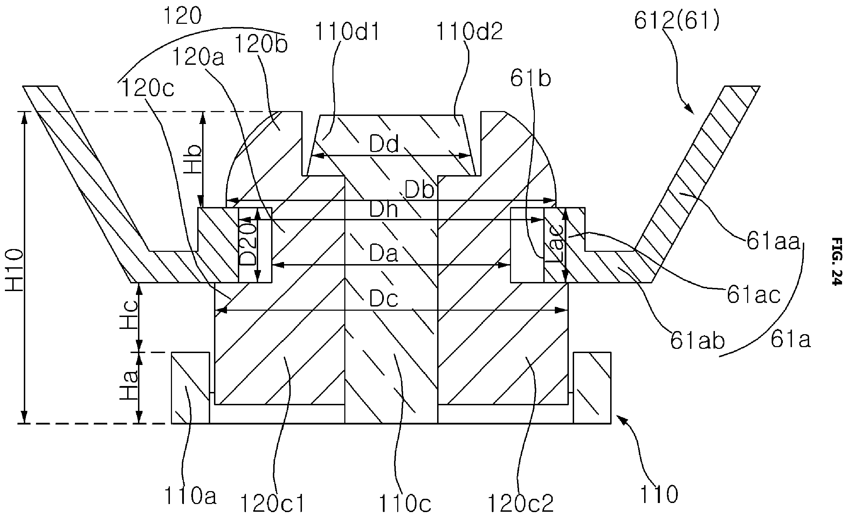

First and second stoppers 110d1 and 110d2 may be located inside the head 120b, and may be hooked to the distal end of the neck 120a. First and second protrusions 120b1 and 120b2 may protrude from the inner circumferential surface of the head 120b toward the boss 110c, and may be adjacent to the outer circumferential surface of the boss 110c. The first and second protrusions 120b1 and 120b2 may be alternately disposed with the first and second stoppers 110d1 and 110d2. Due to the first and second protrusions 120b1 and 120b2 and the first and second stoppers 110d1 and 110d2, the holder 120 may be stably inserted into the fixing hole 61b (see FIG. 24). Accordingly, the holder 120 may be detachably coupled to the coupling part 110 in a vertical direction. The holder 120 coupled to the coupling part 110 may not be separated from the coupling part 110 in the vertical direction by being hooked to the bridge 110b and the stoppers 110d1 and 110d2.

Referring to FIG. 24, the diameter Da of the neck 120a may be equal to or smaller than the diameter Dh of the fixing hole 61b. The diameter Db of the head 120b may be larger than the diameter Dh of the fixing hole 61b. The diameter Dc of the body 120c may be larger than the diameter Dh of the fixing hole 61b. As the length of the neck 120a, the distance D20 between the body 120c and the head 120b may be equal to or larger than the length Lac of the vertical portion 61ac. When the neck 120a and the head 120b are inserted into the fixing part 61 through the fixing hole 61b, the neck 120a may be located in the fixing hole 61b, the body 120c may be hooked to the horizontal portion 61ab, and the head 120b may be hooked to the vertical portion 61ac. That is, the holder 120 may be detachably coupled to the fixing part 61.

Accordingly, the speaker 100 may be vertically coupled to the fixing part 61 of the frame 60 through the holder 120 vertically coupled to the coupling part 110. That is, even if the holder 120 is located inside the inner boundary 101IL (see FIG. 15), the space 101S (see FIG. 15) in which the holder 120 can move horizontally may not be necessary. In addition, the speaker 100 coupled to the fixing part 61 may be spaced apart from the rear surface of the frame 60, thereby minimizing the transmission of vibration of the speaker 100 to the frame 60.

In addition, since the head 120b and the body 120c are hooked to the fixing part 61 and the holder 120 is coupled to the fixing part 61, the length of the neck 120a may be significantly reduced. That is, an increase in the thickness of device due to the holder 120 may be minimized. A height H10 of the head 120b with respect to the coupling part 110 may be 10 mm or less. For example, the height Ha of the sidewall of the base 110a may be 2.3 mm, the height Hc of the portion of the body 120c not covered by the sidewall of the base 110a may be 0.7 mm, the distance D20 between the body 120c and the head 120b may be 2.3 mm, the height Hb of the head 120b may be 1.7 mm, and the height H10 may be 7.0 mm.

In addition, since the holder 120 is coupled to the fixing part 61 as the head 120b and the body 120c are hooked to the fixing part 61, the speaker 100 may be stably coupled to the frame 60 without a separate hook 101K (see FIG. 19).

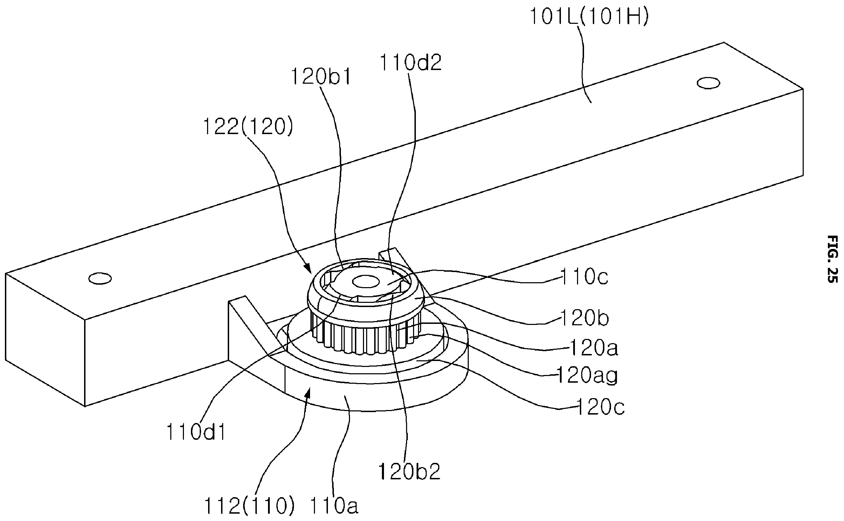

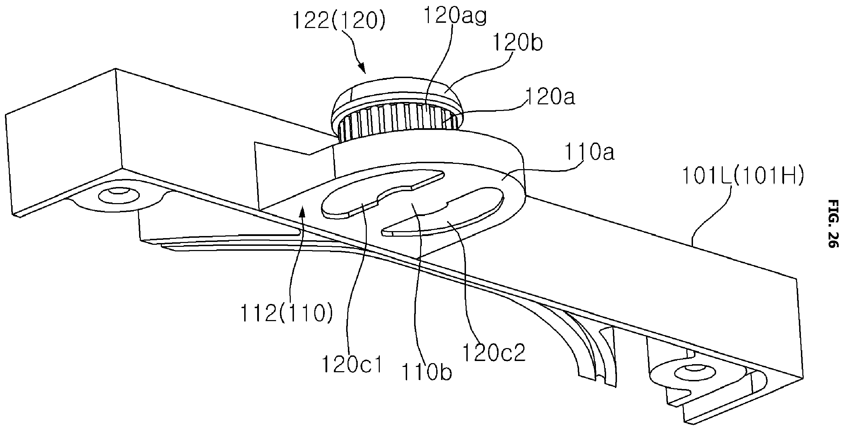

Referring to FIGS. 25 and 26, a plurality of protrusions 120ag may be formed on the outer circumferential surface of the neck 120a, and may be arranged along the outer circumferential surface. The protrusion 120ag may be referred to as embossing 120ag. Before the neck 120a is inserted into the fixing hole 61b, the diameter of the plurality of protrusions 120ag with respect to the center of the neck 120a may be larger than the diameter Dh of the fixing hole 61b, the plurality of protrusions 120ag may be pressed into the fixing hole 61b, may be pressed into the vertical portion 61ac, and may be in close contact with the vertical portion 61ac between the neck 120a and the vertical portion 61ac.

For example, the diameter Dh (see FIG. 24) of the fixing hole 61b may be 8 mm, the diameter Da of the neck 120a may be 7.5 mm, and the diameter (the diameter before the neck 120a is inserted into the fixing hole 61b) of the protrusions 120ag may be 8.2 mm.

Accordingly, even if the distance D20 between the body 120c and the head 120b, as the length of the neck 120a, is larger than the length Lac of the vertical portion 61ac, the holder 120 coupled to the fixing part 61 may not move in the vertical direction. For example, the distance D20 between the body 120c and the head 120b may be 2.3 mm, and the length Lac of the vertical portion 61ac may be 1.7 mm.

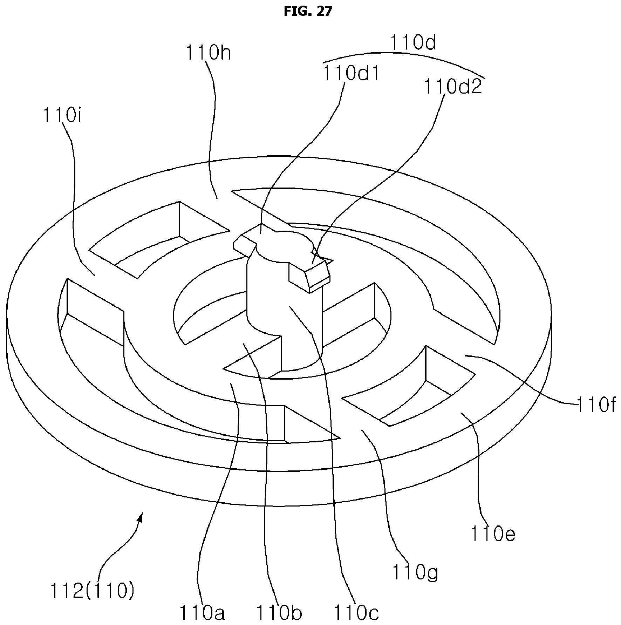

Referring to FIG. 27, the diameter of the outer base 110e may be larger than the diameter of the base 110a, and may be a concentric circle of the base 110a. The plurality of bridges 110f, 110g, 110h, and 110i may be coupled to the outer circumferential surface of the base 110a and the inner circumferential surface of the outer base 110e. The rigidity of the coupling part 110 may be improved by the outer base 110e. For example, a relatively heavy speaker 100 may be coupled to the frame 60 through the holder 120 and the coupling part 110 having the base 110a and the outer base 110e.

Referring to FIGS. 1 to 27, a sound device according to an aspect of the present disclosure may include: a frame; a speaker adjacent to the frame; a coupling part formed at one side of the speaker, and facing the frame; and a holder positioned between the frame and the coupling part, and coupled to the coupling part in a direction toward the coupling part from the frame, wherein the holder may penetrate the frame in a direction toward the frame from the coupling part, and may be coupled to the frame.

The speaker may include a housing which has an inner space, and at which the coupling part is formed, and the coupling part may be positioned in a rim of the housing or inside the rim.

The holder may include a soft material, and the speaker may be spaced apart from the frame.

The coupling part may include a plurality of coupling parts spaced apart from each other, and the holder may include a plurality of holders coupled to the plurality of coupling parts.

The coupling part may include: a base on which the holder is seated; a protruding part extending from the base in a direction toward the frame from the coupling part, and penetrating the holder; and a stopper protruding from an end of the protruding part, and hooked to the holder.

The base may have a ring shape, and the coupling part further may include: a bridge which crosses the base, and at which the protruding part is formed; and a pair of holes formed at the base, and opposite to each other with respect to the bridge.

The holder may include a pair of legs protruding from the holder toward the pair of holes, and inserted into the pair of holes.

The coupling part further may include an outer base which is a concentric of the base having a larger diameter than the base, and which is coupled to an outer circumferential surface of the base.

The holder may include: a body seated on the base; a neck opposite to the base with respect to the body, and having a smaller diameter than the body; and a head opposite to the body with respect to the neck, and having a larger diameter than the neck, wherein the protruding part may penetrate the body, the neck, and the head, wherein the stopper may be positioned inside the head, and may be hooked to an end of the neck.

The holder may include a plurality of protrusions which protrude from an inner circumferential surface of the head toward an outer circumferential surface of the protruding part, and which are adjacent to the outer circumferential surface of the protruding part, wherein the stopper may include a plurality of stoppers alternately disposed with the plurality of protrusions.

The frame further may include a fixing part which is formed while being pressed from one surface of the frame toward the coupling part, and which has a fixing hole, wherein the neck may be positioned in the fixing hole, wherein a portion of the fixing part defining a boundary of the fixing hole overlaps the head and the body.

The fixing part may include: an inclined portion extend in an inclined direction with respect to the frame; a horizontal portion bent from the inclined portion toward the fixing hole; and a vertical portion bent from the horizontal portion toward the frame, and defining the boundary of the fixing hole, wherein a distance between the head and the body may be equal to or larger than a length of the vertical portion.

The holder may include a plurality of protrusions which are formed at an outer circumferential surface of the neck, and which are arranged along the outer circumferential surface of the neck, wherein a diameter of the plurality of protrusions with respect to a center of the neck may be larger than a diameter of the fixing hole, before the neck is inserted into the fixing hole.

A display device may include the sound device, and a display panel coupled to the frame of the sound device.

The sound device may include a plurality of sound devices spaced apart from each other along an edge of the frame.

Effects of a sound device and a display device having the same according to the present disclosure are described as follows.

According to at least one of the embodiments of the present disclosure, it is possible to provide a structure that couples a speaker to a frame and minimizes the transmission of vibrations of the speaker to the frame.

According to at least one of the embodiments of the present disclosure, it is possible to provide a structure that minimizes the cost required for coupling a speaker and a frame.

According to at least one of the embodiments of the present disclosure, it is possible to provide a sound device that can minimize volume loss of a speaker due to a coupling structure between the speaker and a frame located inside the speaker.

According to at least one of the embodiments of the present disclosure, it is possible to provide a structure capable of stably coupling a speaker to a frame while having a small thickness.

According to at least one of the embodiments of the present disclosure, it is possible to a structure capable of preventing a speaker from being shaken or separated from a frame while being coupled to the frame.

Certain embodiments or other embodiments of the disclosure described above are not mutually exclusive or distinct from each other. Any or all elements of the embodiments of the disclosure described above may be combined or combined with each other in configuration or function.

For example, a configuration "A" described in one embodiment of the disclosure and the drawings and a configuration "B" described in another embodiment of the disclosure and the drawings may be combined with each other. Namely, although the combination between the configurations is not directly described, the combination is possible except in the case where it is described that the combination is impossible.

The foregoing embodiments are merely examples and are not to be considered as limiting the present disclosure. The scope of the present disclosure should be determined by rational interpretation of the appended claims, and all modifications within the equivalents of the disclosure are intended to be included within the scope of the present disclosure.

## Claims

1. A sound device comprising:
a frame;
a speaker adjacent to the frame;
a coupling part formed at one side of the speaker, and facing the frame; and
a holder positioned between the frame and the coupling part, and coupled to the coupling part in a direction toward the coupling part from the frame,
wherein the holder penetrates the frame in a direction toward the frame from the coupling part, and is coupled to the frame.

2. The sound device of claim 1, wherein the speaker comprises a housing which has an inner space, and at which the coupling part is formed,
wherein the coupling part is positioned in a rim of the housing or inside the rim.

3. The sound device of claim 1 or 2, wherein the holder comprises a soft material,
wherein the speaker is spaced apart from the frame.

4. The sound device of claim 3, wherein the coupling part comprises a plurality of coupling parts spaced apart from each other,
wherein the holder comprises a plurality of holders coupled to the plurality of coupling parts.

5. The sound device of any one of claims 1 to 4, wherein the coupling part comprises:
a base on which the holder is seated;
a protruding part extending from the base in a direction toward the frame from the coupling part, and penetrating the holder; and
a stopper protruding from an end of the protruding part, and hooked to the holder.

6. The sound device of claim 5, wherein the base has a ring shape,
wherein the coupling part further comprises:
a bridge which crosses the base, and at which the protruding part is formed; and
a pair of holes formed at the base, and opposite to each other with respect to the bridge.

7. The sound device of claim 6, wherein the holder comprises a pair of legs protruding from the holder toward the pair of holes, and inserted into the pair of holes.

8. The sound device of claim 6 or 7, wherein the coupling part further comprises an outer base which is a concentric of the base having a larger diameter than the base, and which is coupled to an outer circumferential surface of the base.

9. The sound device of any one of claims 5 to 8, wherein the holder comprises:
a body seated on the base;
a neck opposite to the base with respect to the body, and having a smaller diameter than the body; and
a head opposite to the body with respect to the neck, and having a larger diameter than the neck,
wherein the protruding part penetrates the body, the neck, and the head,
wherein the stopper is positioned inside the head, and is hooked to an end of the neck.

10. The sound device of claim 9, wherein the holder comprises a plurality of protrusions which protrude from an inner circumferential surface of the head toward an outer circumferential surface of the protruding part, and which are adjacent to the outer circumferential surface of the protruding part,
wherein the stopper comprises a plurality of stoppers alternately disposed with the plurality of protrusions.

11. The sound device of claim 9 or 10, wherein the frame further comprises a fixing part which is formed while being pressed from one surface of the frame toward the coupling part, and which has a fixing hole,
wherein the neck is positioned in the fixing hole,
wherein a portion of the fixing part defining a boundary of the fixing hole overlaps the head and the body.

12. The sound device of claim 11, wherein the fixing part comprises:
an inclined portion extend in an inclined direction with respect to the frame;
a horizontal portion bent from the inclined portion toward the fixing hole; and
a vertical portion bent from the horizontal portion toward the frame, and defining the boundary of the fixing hole,
wherein a distance between the head and the body is equal to or larger than a length of the vertical portion.

13. The sound device of claim 12, wherein the holder comprises a plurality of protrusions which are formed at an outer circumferential surface of the neck, and which are arranged along the outer circumferential surface of the neck,
wherein a diameter of the plurality of protrusions with respect to a center of the neck is larger than a diameter of the fixing hole, before the neck is inserted into the fixing hole.

14. A display device comprising:
the sound device of any one of claims 1 to 13; and
a display panel coupled to the frame of the sound device.

15. The display device of claim 14, wherein the sound device comprises a plurality of sound devices spaced apart from each other along an edge of the frame.
